(19) Europäisches Patentamt
European Patent Office
Office européen des brevets

(11) **EP 2 681 525 B1**

(12) **FASCICULE DE BREVET EUROPEEN**

(45) Date de publication et mention
de la délivrance du brevet:
**21.08.2019 Bulletin 2019/34**

(21) Numéro de dépôt: **12711930.3**

(22) Date de dépôt: **23.02.2012**

(51) Int Cl.:
***G01L 3/10*** *(2006.01)*   ***G01L 25/00*** *(2006.01)*

(86) Numéro de dépôt international:
**PCT/FR2012/050383**

(87) Numéro de publication internationale:
**WO 2012/117187 (07.09.2012 Gazette 2012/36)**

(54) **PROCEDE DE CALIBRATION D'UN COUPLEMETRE A TORSION**

KALIBRIERVERFAHREN FÜR EINEN DREHMOMENTMESSER

METHOD FOR CALIBRATING A TORQUEMETER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.03.2011 FR 1151682**

(43) Date de publication de la demande:
**08.01.2014 Bulletin 2014/02**

(73) Titulaire: **Safran Helicopter Engines
64510 Bordes (FR)**

(72) Inventeur: **HAEHNER, Edgar
F-64510 Bordes (FR)**

(74) Mandataire: **Milien, Jean-Baptiste Aurélien et al
Cabinet Beau de Loménie
158, rue de l'Université
75340 Paris Cedex 07 (FR)**

(56) Documents cités:
**EP-A1- 0 517 592    WO-A1-2009/141261
US-A- 5 182 953**

EP 2 681 525 B1

**Description**

Arrière-Plan de l'invention

La présente invention concerne les dispositifs pour mesurer le couple transmis par un arbre de moteur, par exemple un arbre d'une turbomachine d'un aéronef.

La présente invention concerne plus particulièrement un procédé de calibration d'un couplemètre à torsion, préférentiellement destiné à être monté dans une turbomachine d'hélicoptère.

Il convient de rappeler que la mesure du couple de rotation d'un arbre est particulièrement importante dans le domaine des moteurs d'hélicoptères car il s'agit généralement de l'une des données essentielles que le pilote prend en considération pour le pilotage. En effet, dès lors que le rotor d'un hélicoptère présente une vitesse constante, la puissance fournie par ce dernier dépend exclusivement du couple.

Le document FR 2 931 552 décrit un couplemètre de torsion qui se base sur une mesure de la déformation en torsion de l'arbre, cette déformation étant notamment fonction du couple transmis.

Le couplemètre à torsion décrit dans ce document comporte :

- un arbre de puissance destiné à transmettre un couple de rotation autour d'un axe, ledit arbre de puissance étant muni d'une première roue portant des première et seconde séries de repères angulaires ;
- un arbre de référence ayant une première extrémité fixée à une extrémité de l'arbre de puissance et une seconde extrémité pourvue d'une seconde roue portant des troisième et quatrième séries de repères angulaires, les repères angulaires des première et troisième séries étant parallèles entre eux, tandis que les repères angulaires des deuxième et quatrième séries sont parallèles entre eux tout en étant inclinés par rapport aux repères des première et troisième séries ;
- un dispositif de mesure pour mesurer un premier écart angulaire entre deux repères angulaires appartenant respectivement aux première et troisième séries de repères angulaires, et un second écart angulaire entre deux repères angulaires appartenant respectivement aux deuxième et quatrième séries de repères angulaires ;
- un organe de calcul pour déterminer une valeur de couple délivrée par l'arbre de puissance notamment à partir des premier et second écarts angulaires mesurés par le dispositif de mesure.

Pour calculer le couple fourni par l'arbre de puissance, l'organe de calcul doit préalablement déterminer la température de l'arbre grâce aux données fournies par le dispositif de mesure. Une fois la température déterminée, la valeur de couple est déterminée à l'aide d'une base de données préalablement stockée dans une mémoire de l'organe de calcul, cette base de données contenant des valeurs de couple correspondant à plusieurs valeurs de déformation angulaire pour différentes températures.

Le couplemètre à torsion de l'art antérieur nécessite donc la connaissance de la température de l'arbre de puissance, ainsi que le modèle de comportement du matériau de l'arbre de puissance.

D'autres procédés de calibration des couplemètres de torsion sont décris dans les documents US 5182953 et EP 0517592.

Objet et résumé de l'invention

Un objet de la présente invention est de proposer un procédé de calibration d'un couplemètre à torsion du type précité de sorte que le couplemètre calibré puisse calculer le couple sans avoir à déterminer la température de l'arbre de puissance.

Selon le procédé objet de l'invention :

- on met le couplemètre à torsion dans un premier état dans lequel la valeur du couple délivré par l'arbre de puissance est située dans une première plage de couple prédéterminée, les arbres du couplemètre à torsion étant alors à une première température ;
- on réalise un premier ensemble de mesures dans lequel on détermine les premier et second écarts angulaires, et on mesure le couple délivré par l'arbre de puissance à l'aide d'un couplemètre de référence ;
- on met le couplemètre à torsion dans un deuxième état dans lequel la valeur du couple délivré par l'arbre de puissance est située dans une seconde plage de couple prédéterminée, la seconde plage de couple prédéterminée étant distincte de la première plage de couple prédéterminée, les arbres du couplemètre à torsion étant alors sensiblement à la première température ;
- on réalise un deuxième ensemble de mesures dans lequel on détermine les premier et second écarts angulaires, et on mesure le couple délivré par l'arbre de puissance à l'aide du couplemètre de référence ;
- on met le couplemètre dans un troisième état dans lequel la valeur du couple délivré par l'arbre de puissance est

située dans la seconde plage de couple prédéterminée, les arbres du couplemètre à torsion étant amenés à une seconde température, différente de la première température ;

- on réalise un troisième ensemble de mesures dans lequel on détermine les premier et second écarts angulaires, et on mesure le couple délivré par l'arbre de puissance à l'aide du couplemètre de référence ;
- on met le couplemètre dans un quatrième état dans lequel la valeur du couple délivré par l'arbre de puissance est située dans la première plage de couple prédéterminée, tandis que les arbres du couplemètre à torsion sont sensiblement à la seconde température ;
- on réalise un quatrième ensemble de mesures dans lequel on détermine les premier et second écarts angulaires, et on mesure le couple délivré par l'arbre de puissance à l'aide du couplemètre de référence;
- on calibre l'organe de calcul à partir des premier, deuxième, troisième et quatrième ensembles de mesures.

Les premier, deuxième, troisième et quatrième ensembles de mesures permettent de déterminer des données de calibration, lesquelles sont ensuite utilisées par l'organe de calcul pour calculer la valeur du couple tel que mesuré par le couplemètre à torsion.

Une fois calibré, l'organe de calcul du couplemètre à torsion détermine la valeur du couple à partir des premier et second écarts angulaires ainsi qu'à partir des données de calibration.

Le procédé de calibration est particulièrement simple et rapide à réaliser puisqu'il ne nécessite que quatre ensemble de mesures, et deux valeurs de couple stabilisées en température. Une telle calibration peut être réalisée en moins de 30 minutes par un opérateur expérimenté.

En outre, le procédé de calibration selon l'invention est préférentiellement mis en oeuvre alors que le couplemètre est monté dans la turbomachine. La calibration peut donc facilement avoir lieu sur un banc d'essai, sans démontage de la turbomachine.

Il a également été constaté qu'un couplemètre calibré grâce à la mise en oeuvre du procédé selon l'invention est plus précis que le couplemètre de l'art antérieur. En pratique, on obtient une précision qui est à peine moins bonne que celle du couplemètre de référence utilisé lors de la calibration.

Une fois étalonné, le couplemètre à torsion est capable de fournir une valeur de couple précise sans qu'il soit nécessaire de déterminer la température de l'arbre de puissance. Par suite, il n'est plus nécessaire de connaître le modèle de comportement du matériau de l'arbre de puissance en fonction de la température pour pouvoir calculer le couple transmis par l'arbre de puissance.

Selon un mode de mise en oeuvre préféré, la seconde plage de couple prédéterminée est supérieure à la première plage de couple prédéterminée, tandis que la seconde valeur de température est supérieure à la première valeur de température.

Ainsi, de préférence, le deuxième ensemble de mesures est réalisé sensiblement à la même température que le premier ensemble de mesures. Le troisième ensemble de mesures est réalisé dans la même plage que le deuxième ensemble de mesures. Le quatrième ensemble de mesure est réalisé sensiblement à la même température que le troisième ensemble de mesures et dans la même plage de couple que le premier ensemble de mesures.

Par "sensiblement", on entend de préférence une tolérance de plus ou moins 5 à 20 %.

Préférentiellement, le deuxième ensemble de mesures est réalisé rapidement après le premier ensemble de mesures, par exemple moins d'une minute après le premier ensemble de mesures, de sorte que la température des arbres, grâce à l'inertie thermique, n'ait pas le temps d'augmenter consécutivement à l'augmentation du couple. En effet, l'augmentation du couple, entre la première et seconde valeur de couple prédéterminée, est obtenue en augmentant le régime de la turbomachine, ce qui provoque un échauffement de la turbomachine et, par voie de conséquence, une élévation de la température des arbres.

De manière similaire, le quatrième ensemble de mesures est réalisé rapidement après le troisième ensemble de mesures, par exemple moins d'une minute après le troisième ensemble de mesures de sorte que la température des arbres, grâce à l'inertie thermique, n'ait pas le temps de diminuer consécutivement à la diminution du couple.

Par ailleurs, la première plage de couple prédéterminée est préférentiellement, mais pas exclusivement, située autour d'une première valeur moyenne de couple comprise entre 0 et 20% du couple maximum que peut délivrer la turbomachine équipée du couplemètre à torsion.

La seconde plage de couple prédéterminée est quant à elle préférentiellement, mais pas exclusivement, située autour d'une seconde valeur moyenne de couple qui est supérieure à 80% dudit couple maximum.

A titre d'exemple non limitatif, la largeur de la première plage de couple correspond à la première valeur moyenne plus ou moins 10 %. De même, à titre d'exemple non limitatif, la largeur de la seconde plage de couple correspond à la seconde valeur moyenne plus ou moins 10 %.

Afin d'améliorer la précision de la calibration, on attend que la température des arbres du couplemètre soit stabilisée à la seconde valeur de température avant de réaliser le troisième ensemble de mesures.

Les inventeurs ont constaté qu'une durée d'environ 15 minutes pouvait s'avérer suffisante pour que la température des arbres se stabilise à la seconde valeur de température.

Avantageusement, les premier, deuxième, troisième et quatrième ensembles de mesures sont utilisés pour déterminer des données de calibration qui sont stockées dans une mémoire de l'organe de calcul.

Cette mémoire est de préférence réinscriptible de sorte qu'il pourra être mis en oeuvre, si nécessaire, plusieurs calibrations du couplemètre à torsion au cours de la vie de la turbomachine.

Avantageusement, les première et seconde roues sont des roues phoniques, et les repères angulaires sont des dents.

En outre, le dispositif de mesure est préférentiellement constitué par un unique capteur magnétique.

L'invention porte également sur un couplemètre à torsion calibré comportant :

- un arbre de puissance destiné à transmettre un couple de rotation autour d'un axe, ledit arbre de puissance étant muni d'une première roue portant des première et seconde séries de repères angulaires ;
- un arbre de référence ayant une première extrémité fixée à une extrémité de l'arbre de puissance et une seconde extrémité pourvue d'une seconde roue portant des troisième et quatrième séries de repères angulaires, les repères angulaires des première et troisième séries étant parallèles entre eux, tandis que les repères angulaires des deuxième et quatrième séries sont parallèles entre eux tout en étant inclinés par rapport aux repères des première et troisième séries ;
- un dispositif de mesure pour mesurer un premier écart angulaire entre deux repères appartenant respectivement aux première et troisième séries de repères angulaires, et un second écart angulaire entre deux repères appartenant respectivement aux deuxième et quatrième séries de repères angulaires ;
- un organe de calcul pour déterminer une valeur de couple délivrée par l'arbre de puissance à partir des premier et second écarts angulaires mesurés par le dispositif de mesure, l'organe de calcul comportant une mémoire stockant des données de calibration obtenues par la mise en oeuvre du procédé selon l'invention, la valeur du couple telle que déterminée par l'organe de calcul étant fonction des premier et second écarts angulaires ainsi que desdites données de calibrations.

La présente invention porte enfin sur une turbomachine comportant un couplemètre à torsion calibré selon l'invention.

Brève description des dessins

L'invention sera mieux comprise à la lecture de la description qui suit d'un mode de réalisation de l'invention donné à titre d'exemple non limitatif, en référence aux dessins annexés, sur lesquels :

- la figure **1** est une demi-vue en coupe axiale d'un couplemètre à torsion calibré selon l'invention ;
- la figure **2** montre la position relative des dents des première et seconde roues phonique du couplemètre de la figure **1**, et représente les premier et second écarts angulaires mesurés par le capteur du couplemètre de la figure **1** ;
- la figure **3** illustre l'installation pour la mise en oeuvre du procédé de calibration selon l'invention ;
- la figure **4** illustre les étapes du procédé de calibration selon l'invention ; et
- la figure **5** montre une turbomachine équipée du couplemètre à torsion calibré par la mise en oeuvre du procédé selon l'invention.

Description détaillée de l'invention

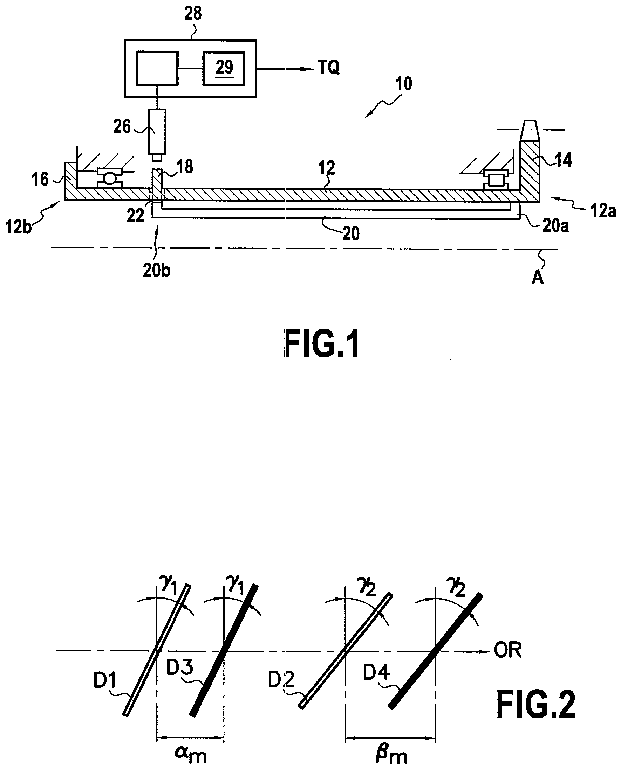

La figure **1** illustre un mode de réalisation préféré du couplemètre à torsion **10** qui est destiné à être calibré par la mise en oeuvre du procédé selon l'invention.

Le couplemètre à torsion **10** comporte un arbre de puissance creux **12** destiné à transmettre le couple de rotation autour de son axe **A**. C'est ce couple que l'on cherche à mesurer.

Dans l'exemple de la figure **1**, l'arbre de puissance **12** comporte un pignon **14** à sa première extrémité **12a**, et un organe d'entrainement **16** disposé à sa seconde extrémité **12b** opposée à la première extrémité. On peut bien évidemment équiper les extrémités de l'arbre de puissance de manière différente.

Par ailleurs, l'arbre de puissance **12** porte, à proximité de sa première extrémité **12b**, une première roue, en l'espèce une roue phonique **18**, qui est coaxiale et qui comporte une pluralité de repères angulaires, en l'espèce des dents.

Le couplemètre à torsion **10** comporte en outre un arbre de référence **20** s'étendant axialement à l'intérieur de l'arbre de puissance **12** auquel il est fixé par sa première extrémité **20a** voisine de la première extrémité **12a** de l'arbre de puissance **12**, tandis que sa seconde extrémité **20b** est libre. La seconde extrémité **20b** de l'arbre de référence **20**, opposée à sa première extrémité **20a**, porte une seconde roue, en l'espèce du type phonique **22,** qui est concentrique à la première roue phonique **18**. La seconde roue phonique **22** porte une pluralité de repères angulaires, en l'espèce des dents qui s'étendent radialement à travers des ouvertures ménagées dans l'arbre de puissance **20**. Une configuration alternative est décrite dans FR 2 931 552.

En face des première et seconde roues phoniques **18,22** est disposé un unique capteur magnétique **26** qui est apte à générer un signal électrique à chaque passage d'une dent devant lui, lequel signal est ensuite envoyé à un organe de calcul **28** destiné à déterminer la valeur du couple transmis par l'arbre de puissance **12**.

La première roue phonique **18** comporte des première et seconde séries de repères angulaires, à savoir une première série de dents **D1** identiques les unes aux autres, ainsi qu'une seconde série de dents **D2** identiques les unes aux autres, tandis que la seconde roue phonique **22** comporte une troisième série de dents **D3** identiques les unes aux autres ainsi qu'une quatrième série de dents **D4** identiques les unes aux autres.

Les première et seconde roues phoniques sont arrangées de telle sorte que les dents **D1, D2** de la première roue phonique **18** alternent angulairement avec les dents **D3, D4** de la seconde roue phonique **22**.

Comme on le voit sur la figure **2**, les dents **D1, D3** des première et troisième séries sont parallèles entre elles, tandis que les dents **D2, D4** des deuxième et quatrième série sont parallèles entre elles tout en étant inclinées par rapport aux dents des première et troisième séries.

Sur cette figure **2**, on a représenté la répartition des dents selon une direction orthoradiale **OR** de l'arbre de puissance. On comprend donc que les dents blanches **D1** et **D2** appartiennent à la première roue phonique, tandis que les dents noires appartiennent à la seconde roue phonique.

Les dents **D1** et **D3** sont inclinées d'un angle $\gamma 1$ par rapport à la direction axiale de l'arbre de puissance, tandis que les dents **D2** et **D4** sont inclinées d'un angle $\gamma 2$ différent de $\gamma 1$.

Le capteur magnétique **26** est un dispositif de mesure qui permet de déterminer un premier écart angulaire $\alpha_m$ entre deux dents **D1, D3** appartenant respectivement à la première série de dents et à la deuxième série de dents. Le capteur magnétique **26** permet également de mesurer un second écart angulaire $\beta_m$ entre deux dents **D2, D4** appartenant respectivement à la deuxième série de dents et à la quatrième série de dents.

L'organe de calcul **28** du couplemètre à torsion **10** est programmé pour calculer une valeur de couple **TQ** à partir des premier et deuxième écarts angulaires $\alpha_m$ et $\beta_m$ mesurés par le capteur magnétique **26** et de données de calibration stockées dans une mémoire **29** de l'organe de calcul **28**.

La valeur de couple **TQ** est par exemple mais pas exclusivement obtenue grâce à la formule mathématique qui suit.

$$(1) \quad TQ(\alpha_m, \beta_m) = \frac{\beta_m - \beta_{off} + \left[\left(\beta_m - \beta_{off}\right) - \left(\alpha_m - \alpha_{off}\right)\right] * \dfrac{TQ0_\beta}{TQ0_\alpha - TQ0_\beta}}{R_0 + \left[\left(\beta_m - \beta_{off}\right) - \left(\alpha_m - \alpha_{off}\right)\right] * \dfrac{1}{TQ0_\alpha - TQ0_\beta}}$$

Où :

- $\alpha_m$ et $\beta_m$ représentent les premier et deuxième écarts angulaires mesurés par le capteur ;
- $R_0$, $\alpha_{off}$, $\beta_{off}$, $TQ0_\alpha$ et $TQ0_\beta$ sont les données de calibration.

Cette formule est stockée dans un processeur de l'organe de calcul.

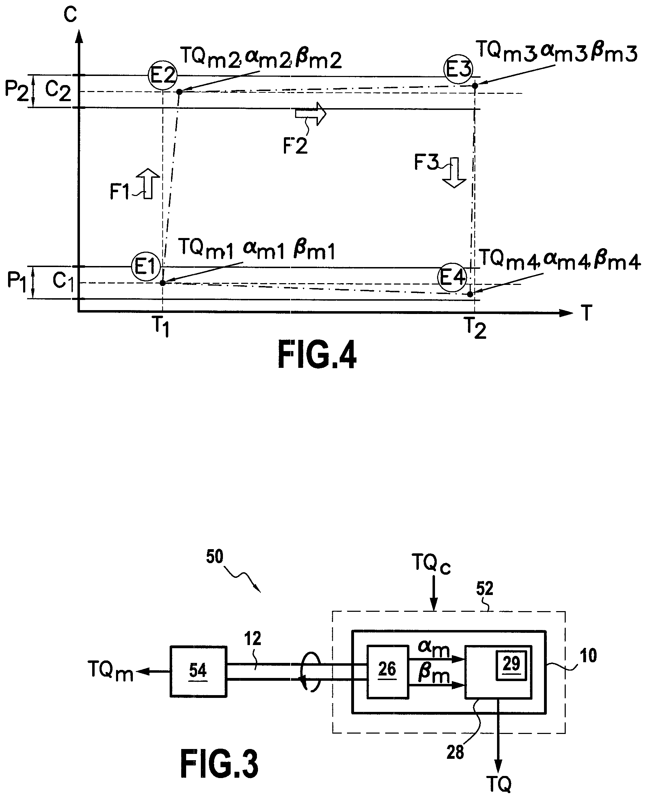

Les données de calibration $R_0$, $\alpha_{off}$, $\beta_{off}$, TQ0. et $TQ0_\beta$ sont obtenues à l'issue du procédé de calibration selon l'invention que l'on va maintenant décrire en référence aux figures **3** et **4**.

On comprend donc que le couplemètre à torsion est parfaitement caractérisé dès lors que l'on connaît les données de calibration $R_0$, $\alpha_{off}$, $\beta_{off}$, $TQ0_\alpha$ et $TQ0_\beta$. Par suite, l'objet de la calibration est le calcul des valeurs $R_0$, $\alpha_{off}$, $\beta_{off}$, $TQ0_\alpha$ et $TQ0_\beta$.

La figure **3** illustre l'installation mettant en oeuvre le procédé de calibration conforme à l'invention. Il s'agit en l'espèce d'un banc de calibration **50**.

Le couplemètre à torsion **10** qui est calibré est monté dans une turbomachine **52**, cette dernière étant disposé sur le banc de calibration **50**.

L'extrémité de l'arbre de puissance **12** est fixée à un couplemètre de référence **54** qui est extérieur à la turbomachine **52**.

Le couplemètre de référence **54** fournit donc une mesure de référence **TQ_m** du couple délivré par l'arbre de puissance **12** lorsqu'un couple de consigne **TQ_c** est demandé à la turbomachine. On comprend que lorsque le couplemètre n'est pas calibré, la valeur **TQ_m** ne correspond pas exactement à la valeur de consigne **TQ_c**.

En se référant maintenant à la figure **4**, on va expliquer en détail un exemple de mise en oeuvre du procédé selon l'invention.

On met tout d'abord le couplemètre à torsion dans un premier état **E1** dans lequel la valeur du couple délivré par l'arbre de puissance **12** est située dans une première plage de couple prédéterminée **P1** sensiblement centrée autour d'une première valeur moyenne de couple **C1**. Dans ce premier état **E1**, les arbres de puissance et de référence du couplemètre à torsion sont à une première température **T1**. Dans cet exemple non limitatif, la première valeur moyenne de couple **C1** est égale à 10% du couple maximum que peut délivrer la turbomachine, tandis que la première température est environ égale à 80°C. Les bornes de la première plage sont situées dans cet exemple à environ plus ou moins 10 % autour de la première valeur moyenne de couple.

Lorsque le couplemètre est dans le premier état **E1**, on réalise un premier ensemble de mesures dans lequel on détermine les premier et second écarts angulaires $\alpha_{m1}$ et $\beta_{m1}$ à l'aide du capteur magnétique **26**, et on mesure le couple **TQ$_{m1}$** délivré par l'arbre de puissance à l'aide du couplemètre de référence **54**.

On augmente le régime de la turbomachine en augmentant la valeur de consigne **TQ$_c$** de manière à mettre le couplemètre de torsion dans un deuxième état **E2** (flèche **F1**) dans lequel la valeur du couple délivré par l'arbre de puissance **12** est située dans une seconde plage de couple prédéterminée **P2** centrée sensiblement autour d'une seconde valeur moyenne de couple **C2**, supérieure à la première valeur moyenne de couple **C1**. On réalise ensuite rapidement un deuxième ensemble de mesures dans lequel on détermine les premier et second écarts angulaires $\alpha_{m2}$ et $\beta_{m2}$ à l'aide du capteur magnétique **26**, et on mesure le couple **TQ$_{m2}$** délivré par l'arbre de puissance à l'aide du couplemètre de référence **54**. Le deuxième ensemble de mesures est réalisé rapidement de sorte que dans le deuxième état, la température des arbres du couplemètre à torsion reste sensiblement égale à la première température **T1**.

Dans cet exemple, la seconde valeur moyenne **C2** est sensiblement égale à 80% du couple maximum que peut délivrer la turbomachine.

Les bornes de la seconde plage sont situées dans cet exemple à environ plus ou moins 10 % de la seconde valeur moyenne de couple.

Après la réalisation du deuxième ensemble de mesures, on attend que le moteur chauffe de telle manière que le couplemètre à torsion soit amené dans un troisième état **E3** (flèche **F2**) dans lequel les arbres du couplemètre à torsion sont à une seconde température **T2**, supérieure à la température **T1**, tandis que la valeur du couple délivré par l'arbre de puissance **12**, reste dans la seconde plage de couple. Autrement dit, la valeur de couple reste sensiblement égale à la seconde valeur moyenne de couple **C2**.

Après avoir attendu quelques minutes que les arbres du couplemètre à torsion **10** se stabilisent à la seconde température **T2**, on réalise un troisième ensemble de mesures dans lequel on détermine les premier et second écarts angulaires $\alpha_{m3}$ et $\beta_{m3}$ à l'aide du capteur magnétique, et on mesure le couple **TQ$_{m3}$** délivré par l'arbre de puissance à l'aide du couplemètre de référence **54**.

Ensuite, on diminue le régime de la turbomachine de manière à amener le couplemètre dans un quatrième état **E4** (flèche **F3**) dans lequel la valeur du couple délivré par l'arbre de puissance **12** est située dans la première plage de couple **P1**. La valeur du couple est sensiblement égale à la première valeur moyenne de couple **C1,** tandis que les arbres du couplemètre sont encore sensiblement à la seconde température **T2**.

Lorsque le couplemètre est mis dans ce quatrième état, on réalise un quatrième ensemble de mesures dans lequel on détermine les premier et second écarts angulaires $\alpha_{m4}$ et $\beta_{m4}$ à l'aide du capteur magnétique, et on mesure le couple **TQ$_{m4}$** délivré par l'arbre de puissance à l'aide du couplemètre de référence **54**. Le quatrième ensemble de mesures est réalisé rapidement après que la première plage de couple prédéterminée **P1** a été atteinte de manière que la température des arbres reste sensiblement égale à la seconde température **T2**.

Bien entendu, le cycle présenté ici n'est pas limitatif et il pourrait être réalisé à l'envers ou dans un ordre différent, pourvu que l'on réalise quatre ensemble de mesures permettant de calculer les données de calibration.

Le couplemètre à torsion, et plus précisément l'organe de calcul, est ensuite calibré à l'aide des premier, deuxième, troisième et quatrième ensembles de mesures.

En d'autres termes, les données de calibration précitées sont déterminées à partir des premier, deuxième, troisième et quatrième ensembles de mesures.

Par exemple :

$$R_0 = \frac{\beta_{m2} - \beta_{m1}}{TQ_{m2} - TQ_{m1}}$$

Puis on calcule les offsets angulaires :

$$\beta_{off} = \beta_{m2} - TQ_{m2} * R_0$$

$$\alpha_{off} = \alpha_{m2} - TQ_{m2} * R_0$$

$$\frac{TQ0_\beta}{TQ0_\alpha - TQ0_\beta} = \frac{B * TQ_{m4} - A * TQ_{m3}}{TQ_{m3} - TQ_{m4}}$$

$$\frac{1}{TQ0_\alpha - TQ0_\beta} = \frac{B - A}{TQ_{m3} - TQ_{m4}}$$

Avec

$$A = \frac{\beta_4 - TQ_{m4} * R_0}{\beta_4 - \alpha_4}$$

$$B = \frac{\beta_3 - TQ_{m3} * R_0}{\beta_3 - \alpha_3}$$

Ces données de calibration sont ensuite stockées dans la mémoire **29** de l'organe de calcul **28** afin d'être utilisées par l'organe de calcul afin de calculer la valeur de couple **TQ**, grâce à la formule (1) présentée ci-dessus.

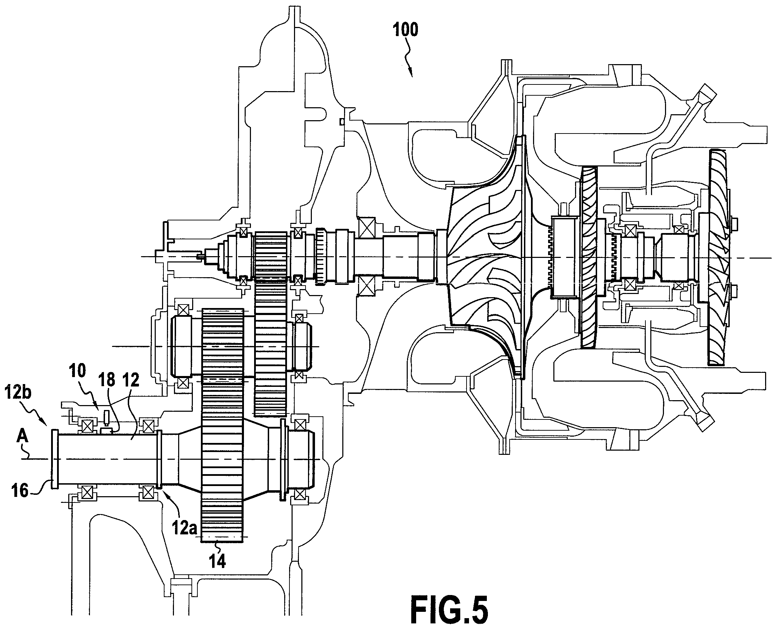

Sur la figure **5**, on a représenté une turbomachine **100** équipée d'un couplemètre à torsion **10** calibré grâce au procédé selon l'invention.

## Revendications

1. Procédé de calibration d'un couplemètre à torsion (10) comportant :

• un arbre de puissance (12) destiné à transmettre un couple de rotation autour d'un axe, ledit arbre de puissance étant muni d'une première roue portant des première et seconde séries de repères angulaires ;
• un arbre de référence (20) ayant une première extrémité fixée à une extrémité de l'arbre de puissance et une seconde extrémité pourvue d'une seconde roue portant des troisième et quatrième séries de repères angulaires, les repères angulaires des première et troisième séries étant parallèles entre eux, tandis que les repères angulaires des deuxième et quatrième séries sont parallèles entre eux tout en étant inclinés par rapport aux repères des première et troisième séries ;
• un dispositif de mesure (26) pour mesurer un premier écart angulaire entre deux repères appartenant respectivement aux première et troisième séries de repères angulaires, et un second écart angulaire entre deux repères appartenant respectivement aux deuxième et quatrième séries de repères angulaires ;
• un organe de calcul (28) pour déterminer une valeur de couple délivrée par l'arbre de puissance à partir des premier et second écarts angulaires mesurés par le dispositif de mesure ;
le procédé **caractérisé en ce que** :

• on met le couplemètre à torsion dans un premier état dans lequel la valeur du couple délivré par l'arbre de puissance est située dans une première plage de couple prédéterminée (P1), les arbres du couplemètre à torsion étant alors à une première température (T1) ;
• on réalise un premier ensemble de mesures dans lequel on détermine les premier et second écarts angulaires ($\alpha_{mi}$, $\beta_{m1}$), et on mesure le couple ($TQ_{m1}$) délivré par l'arbre de puissance à l'aide d'un couplemètre de référence (54) ;
• on met le couplemètre à torsion dans un deuxième état dans lequel la valeur du couple délivré par l'arbre de puissance est située dans une seconde plage de couple prédéterminée (P2), la seconde plage de couple prédéterminée étant distincte de la première plage de couple prédéterminée, les arbres du couplemètre à torsion étant alors à la première température (T1) avec une tolérance de plus ou moins 5 à 20 %;
• on réalise un deuxième ensemble de mesures dans lequel on détermine les premier et second écarts angulaires ($\alpha_{m2}$, $\beta_{m2}$), et on mesure le couple ($TQ_{m2}$) délivré par l'arbre de puissance à l'aide du couplemètre de référence (54) ;
• on met le couplemètre dans un troisième état dans lequel la valeur du couple délivré par l'arbre de puissance est située dans la seconde plage de couple prédéterminée (P2), les arbres du couplemètre à torsion étant amenés à une seconde température (T2), différente de la première température (T1) ;

• on réalise un troisième ensemble de mesures dans lequel on détermine les premier et second écarts angulaires ($\alpha_{m3}$, $\beta_{m3}$), et on mesure le couple ($TQ_{m3}$) délivré par l'arbre de puissance à l'aide du couplemètre de référence (54) ;

• on met le couplemètre dans un quatrième état dans lequel la valeur du couple délivré par l'arbre de puissance est située dans la première plage de couple prédéterminée (P1), tandis que les arbres du couplemètre à torsion sont à la seconde température (T2) avec une tolérance de plus ou moins 5 à 20 %.

• on réalise un quatrième ensemble de mesures dans lequel on détermine les premier et second écarts angulaires ($\alpha_{m4}$, $\beta_{m4}$), et on mesure le couple ($TQ_{m4}$) délivré par l'arbre de puissance à l'aide du couplemètre de référence (54) ;

• on calibre l'organe de calcul à partir des données de calibration déterminées à partir des premier, deuxième, troisième et quatrième ensembles de mesures.

2. Procédé de calibration d'un couplemètre à torsion selon la revendication **1**, dans lequel la seconde plage de couple prédéterminée (P2) est supérieure à la première plage de couple prédéterminée (P1), tandis que la seconde température (T2) est supérieure à la première température (T1).

3. Procédé de calibration d'un couplemètre à torsion selon la revendication **1** ou **2,** dans lequel on attend que la température des arbres du couplemètre soit stabilisée à la seconde température (T2) avant de réaliser le troisième ensemble de mesures.

4. Procédé de calibration d'un couplemètre à torsion selon l'une quelconque des revendications **1** à **3**, dans lequel les données de calibration sont stockées dans une mémoire (29) de l'organe de calcul (28).

5. Procédé de calibration d'un couplemètre à torsion selon l'une quelconque des revendications **1** à **4**, dans lequel le couplemètre à torsion (10) est monté dans une turbomachine (100), et le couplemètre de référence (54) est disposé à l'extérieur de la turbomachine.

6. Procédé de calibration d'un couplemètre à torsion selon l'une quelconque des revendications **1** à **5**, dans lequel les première et seconde roues (18, 22) sont des roues phoniques, et dans lequel les repères angulaires (D1, D2, D3, D4) sont des dents.

7. Procédé de calibration d'un couplemètre à torsion selon l'une quelconque des revendications **1** à **6**, dans lequel le dispositif de mesure est constitué par un unique capteur magnétique (26).

8. Couplemètre à torsion calibré (10) comportant :

• un arbre de puissance (12) destiné à transmettre un couple de rotation autour d'un axe (A), ledit arbre de puissance étant muni d'une première roue (18) portant des première et seconde séries de repères angulaires (D1, D2) ;

• un arbre de référence (20) ayant une première extrémité (20a) fixée à une extrémité de l'arbre de puissance et une seconde extrémité pourvue d'une seconde roue (22) portant des troisième et quatrième séries de repères angulaires (D3, D4), les repères angulaires (D1, D3) des première et troisième séries étant parallèles entre eux, tandis que les repères angulaires des deuxième et quatrième séries (D2, D4) sont parallèles entre eux tout en étant inclinés par rapport aux repères des première et troisième séries ;

• un dispositif de mesure (26) pour mesurer un premier écart angulaire ($\alpha_m$) entre deux repères appartenant respectivement aux première et troisième séries de repères angulaires, et un second écart angulaire ($\beta_m$) entre deux repères appartenant respectivement aux deuxième et quatrième séries de repères angulaires ;

• un organe de calcul (28) pour déterminer une valeur de couple (TQ) délivrée par l'arbre de puissance (12) à partir des premier et second écarts angulaires mesurés par le dispositif de mesure, ledit couplemètre à torsion (10) étant **caractérisé en ce que** l'organe de calcul (28) est adapté pour la mise en oeuvre du procédé de calibration selon l'une quelconque des revendications 1 à 7 et comporte une mémoire (29) stockant des données de calibration et **en ce que** la valeur du couple (TQ) telle que déterminée par l'organe de calcul est fonction des premier et second écarts angulaires ainsi que des données de calibrations.

9. Turbomachine (100) comportant un couplemètre à torsion (10) calibré selon la revendication **8**.

**Patentansprüche**

1.  Kalibrierverfahren eines Drehmomentmessers (10), umfassend:

    • eine Antriebswelle (12), die dazu bestimmt ist, ein Drehmoment um eine Achse zu übertragen, wobei die Antriebswelle mit einem ersten Rad ausgestattet ist, das eine erste und zweite Reihe von Winkelmarkierungen trägt,
    • eine Referenzwelle (20), die ein erstes Ende, das an einem Ende der Antriebswelle befestigt ist, und ein zweites Ende aufweist, das mit einem zweiten Rad versehen ist, das eine dritte und vierte Reihe von Winkelmarkierungen trägt, wobei die Winkelmarkierungen der ersten und dritten Reihe zueinander parallel sind, während die Winkelmarkierungen der zweiten und vierten Reihe zueinander parallel sind, wobei sie in Bezug auf die Markierungen der ersten und dritten Reihe geneigt sind,
    • eine Messvorrichtung (26) zum Messen eines ersten Winkelabstands zwischen zwei Markierungen, die jeweils zu der ersten und dritten Reihe von Winkelmarkierungen gehören, und eines zweiten Winkelabstands zwischen zwei Markierungen, die jeweils zu der zweiten und vierten Reihe von Winkelmarkierungen gehören,
    • eine Recheneinrichtung (28) zum Bestimmen eines Drehmomentwerts, der von der Antriebswelle auf Grundlage des von der Messvorrichtung gemessenen ersten und zweiten Winkelabstands geliefert wird,

    wobei das Verfahren **dadurch gekennzeichnet ist, dass**:

    • der Drehmomentmesser in einen ersten Zustand versetzt wird, in dem sich der Drehmomentwert, der von der Antriebswelle geliefert wird, in einem ersten vorgegebenen Drehmomentbereich (P1) befindet, wobei die Wellen des Drehmomentmessers nun eine erste Temperatur (T1) aufweisen,
    • eine erste Einheit von Messungen ausgeführt wird, wobei der erste und zweite Winkelabstand ($\alpha_{m1}$, $\beta_{m1}$) bestimmt werden und das Drehmoment ($TQ_{m1}$). das von der Antriebswelle geliefert wird, mithilfe eines Referenzdrehmomentmessers (54) gemessen wird,
    • der Drehmomentmesser in einen zweiten Zustand versetzt wird, in dem sich der Drehmomentwert, der von der Antriebswelle geliefert wird, in einem zweiten vorgegebenen Drehmomentbereich (P2) befindet, wobei sich der zweite vorgegebene Drehmomentbereich von dem ersten vorgegebenen Drehmomentbereich unterscheidet und die Wellen des Drehmomentmessers nun die erste Temperatur (T1) mit einer Toleranz von ungefähr 5 bis 20 % aufweisen,
    • eine zweite Einheit von Messungen ausgeführt wird, wobei der erste und zweite Winkelabstand ($\alpha_{m2}$, $\beta_{m2}$) bestimmt werden und das Drehmoment ($TQ_{m2}$), das von der Antriebswelle geliefert wird, mithilfe des Referenzdrehmomentmessers (54) gemessen wird,
    • der Drehmomentmesser in einen dritten Zustand versetzt wird, in dem sich der Drehmomentwert, der von der Antriebswelle geliefert wird, in dem zweiten vorgegebenen Drehmomentbereich (P2) befindet, wobei die Wellen des Drehmomentmessers auf eine zweite Temperatur (T2) gebracht werden, die sich von der ersten Temperatur (T1) unterscheidet,
    • eine dritte Einheit von Messungen ausgeführt wird, wobei der erste und zweite Winkelabstand ($\alpha_{m3}$, $\beta_{m3}$) bestimmt werden und das Drehmoment ($TQ_{m3}$), das von der Antriebswelle geliefert wird, mithilfe des Referenzdrehmomentmessers (54) gemessen wird,
    • der Drehmomentmesser in einen vierten Zustand versetzt wird, in dem sich der Drehmomentwert, der von der Antriebswelle geliefert wird, in dem ersten vorgegebenen Drehmomentbereich (P1) befindet, während die Wellen des Drehmomentmessers die zweite Temperatur (T2) mit einer Toleranz von ungefähr 5 bis 20 % aufweisen,
    • eine vierte Einheit von Messungen ausgeführt wird, wobei der erste und zweite Winkelabstand ($\alpha_{m4}$, $\beta_{m4}$) bestimmt werden und das Drehmoment ($TQ_{m4}$), das von der Antriebswelle geliefert wird, mithilfe des Referenzdrehmomentmessers (54) gemessen wird,
    • die Recheneinrichtung auf Grundlage von Kalibrierungsdaten kalibriert wird, die auf Grundlage der ersten, zweiten, dritten und vierten Einheit von Messungen bestimmt werden.

2.  Kalibrierverfahren eines Drehmomentmessers nach Anspruch 1, wobei der zweite vorgegebene Drehmomentbereich (P2) größer ist als der erste vorgegebene Drehmomentbereich (P1), währen die zweite Temperatur (T2) größer ist als die erste Temperatur (T1).

3.  Kalibrierverfahren eines Drehmomentmessers nach Anspruch 1 oder 2, wobei erwartet wird, dass sich die Temperatur der Wellen des Drehmomentmessers bei der zweiten Temperatur (T2) stabilisiert, bevor die dritte Einheit von Messungen ausgeführt wird.

4. Kalibrierverfahren eines Drehmomentmessers nach einem der Ansprüche 1 bis 3, wobei die Kalibrierungsdaten in einem Speicher (29) der Recheneinrichtung (28) gespeichert sind.

5. Kalibrierverfahren eines Drehmomentmessers nach einem der Ansprüche 1 bis 4, wobei der Drehmomentmesser (10) in einer Turbomaschine (100) montiert ist und der Referenzdrehmomentmesser (54) an der Außenseite der Turbomaschine angeordnet ist.

6. Kalibrierverfahren eines Drehmomentmessers nach einem der Ansprüche 1 bis 5, wobei das erste und zweite Rad (18, 22) Geberräder sind, und wobei die Winkelmarkierungen (D1, D2, D3, D4) Zähne sind.

7. Kalibrierverfahren eines Drehmomentmessers nach einem der Ansprüche 1 bis 6, wobei die Messvorrichtung durch einen einzigen Magnetsensor (26) gebildet wird.

8. Kalibrierter Drehmomentmesser (10), umfassend:

• eine Antriebswelle (12), die dazu bestimmt ist, ein Drehmoment um eine Achse (A) zu übertragen, wobei die Antriebswelle mit einem ersten Rad (18) ausgestattet ist, das eine erste und zweite Reihe von Winkelmarkierungen (D1, D2) trägt,
• eine Referenzwelle (20), die ein erstes Ende (20a), das an einem Ende der Antriebswelle befestigt ist, und ein zweites Ende aufweist, das mit einem zweiten Rad (22) versehen ist, das eine dritte und vierte Reihe von Winkelmarkierungen (D3, D4) trägt, wobei die Winkelmarkierungen (D1, D3) der ersten und dritten Reihe zueinander parallel sind, während die Winkelmarkierungen der zweiten und vierten Reihe (D2, D4) zueinander parallel sind, wobei sie in Bezug auf die Markierungen der ersten und dritten Reihe geneigt sind,
• eine Messvorrichtung (26) zum Messen eines ersten Winkelabstands ($\alpha_m$) zwischen zwei Markierungen, die jeweils zu der ersten und dritten Reihe von Winkelmarkierungen gehören, und eines zweiten Winkelabstands ($\beta_m$) zwischen zwei Markierungen, die jeweils zu der zweiten und vierten Reihe von Winkelmarkierungen gehören,
• eine Recheneinrichtung (28) zum Bestimmen eines Drehmomentwerts (TQ), der von der Antriebswelle (12) auf Grundlage des von der Messvorrichtung gemessenen ersten und zweiten Winkelabstands geliefert wird, wobei der Drehmomentmesser (10) **dadurch gekennzeichnet ist, dass** die Recheneinrichtung (28) angepasst ist, um das Kalibrierverfahren nach einem der Ansprüche 1 bis 7 umzusetzen, und einen Speicher (29) umfasst, der Kalibrierungsdaten speichert, und dadurch, dass der Drehmomentwert (TQ), wie durch die Recheneinrichtung bestimmt, von dem ersten und zweiten Winkelabstand sowie von den Kalibrierungsdaten abhängt.

9. Turbomaschine (100), welche einen Drehmomentmesser (10) umfasst, der nach Anspruch 8 kalibriert ist.

**Claims**

1. A method for calibrating a torsion torquemeter (10) comprising:

• a power shaft (12) intended to transmit rotational torque about an axis, said power shaft being provided with a first wheel carrying a first and second series of angular reference points;
• a reference shaft (20) having a first end attached to one end of the power shaft and a second end provided with a second wheel carrying a third and fourth series of angular reference points, the angular reference points of the first and third series being parallel to each other, whilst the angular reference points of the second and fourth series are parallel to each other whilst being inclined relative to the reference points of the first and third series;
• a measuring device (26) to measure a first angular offset between two reference points respectively belonging to the first and third series of angular reference points, and a second angular offset between two reference points respectively belonging to the second and fourth series of angular reference points;
• a calculation unit (28) to determine a torque value output by the power shaft on the basis of the first and second angular offsets measured by the measuring device;
the method **characterized in that**:

• the torsion torquemeter is placed in a first state wherein the value of the torque output by the power shaft lies within a first predetermined torque range (P1), the shafts of the torsion torquemeter then being at a first temperature (T1);

• a first set of measurements is performed wherein the first and second angular offsets ($\alpha_{m1}$, $\beta_{m1}$) are determined, and the torque ($TQ_{m1}$) output by the power shaft is measured by means of a reference torquemeter (54);

• the torsion torquemeter is placed in a second state wherein the value of the torque output by the power shaft lies within a second predetermined torque range (P2), the second predetermined torque range differing from the first predetermined torque range, the shafts of the torsion torquemeter then being at the first temperature (T1) with a tolerance of plus or minus 5 to 20 %,

• a second set of measurements is performed wherein the first and second angular offsets ($\alpha_{m2}$, $\beta_{m2}$) are determined, and the torque ($TQ_{m2}$) output by the power shaft is measured using the reference torquemeter (54);

• the torquemeter is placed in a third state wherein the value of the torque output by the power shaft lies within the second predetermined torque range (P2), the shafts of the torsion torquemeter being brought to a second temperature (T2) different from the first temperature (T1);

• a third set of measurements is performed wherein the first and second angular offsets ($\alpha_{m3}$, $\beta_{m3}$) are determined, and the torque ($TQ_{m3}$) output by the power shaft is measured using the reference torquemeter (54);

• the torquemeter is placed in a fourth state wherein the value of the torque output by the power shaft lies within the first predetermined torque range (P1), whilst the shafts of the torsion torquemeter are at the second temperature (T2) with a tolerance of plus or minus 5 to 20 %;

• a fourth set of measurements is performed wherein the first and second angular offsets ($\alpha_{m4}$, $\beta_{m4}$) are determined, and the torque ($TQ_{m4}$) output by the power shaft is measured using the reference torquemeter (54);

• the calculation unit is calibrated on the basis of the first, second, third and fourth sets of measurements.

2. A method for calibrating a torsion torquemeter according to claim 1, wherein the second predetermined torque range (P2) is higher than the first predetermined torque range (P1), whilst the second temperature (T2) is higher than the first temperature (T1).

3. The method for calibrating a torsion torquemeter according to claim **1** or **2**, wherein it is waited until the temperature of the shafts of the torquemeter has stabilized at the second temperature (T2) before performing the third set of measurements.

4. The method for calibrating a torsion torquemeter according to any of claims **1** to **3**, wherein the calibration data are stored in a memory (29) of the calculation unit (28).

5. The method for calibrating a torsion torquemeter according to any of claims **1** to **4**, wherein the torsion torquemeter (10) is mounted in a turbomachine (100) and the reference torquemeter (54) is arranged outside the turbomachine.

6. The method for calibrating a torsion torquemeter according to any of claims **1** to **5**, wherein the first and second wheels (18, 22) are phonic wheels and wherein the angular reference points (D1, D2, D3, D4) are teeth.

7. The method for calibrating a torsion torquemeter according to any of claims **1** to **6**, wherein the measuring device is formed by a single magnetic sensor (26).

8. A calibrated torsion torquemeter (10) comprising:

• a power shaft (12) intended to transmit rotational torque about an axis (A), said power shaft being provided with a first wheel (18) carrying a first and second series of angular reference points (D1, D2);

• a reference shaft (20) having a first end (20a) attached to one end of the power shaft and a second end provided with a second wheel (22) carrying a third and fourth series of angular reference points (D3, D4), the angular reference points (D1, D3) of the first and third series lying parallel to each other, whilst the angular reference points of the second and fourth series (D2, D4) are parallel to each other whilst being inclined relative to the reference points of the first and third series;

• a measuring device (26) to measure a first angular offset ($\alpha_m$) between two reference points respectively belonging to the first and third series of angular reference points, and a second angular offset ($\beta_m$) between two reference points respectively belonging to the second and fourth series of angular reference points;

• a calculation unit (28) to determine a torque value (TQ) output by the power shaft (12) on the basis of the first and second angular offsets measured by the measuring device, said torsion torquemeter (10) being **charac-**

**terized in that** the calculation unit (28) is adapted to implement the method according to any of claims **1** to **7**, and comprises a memory (29) storing the calibration data, and **in that** the torque value (TQ) such as determined by the calculation unit is a function of the first and second angular offsets and of the calibration data.

9. A turbomachine (100) comprising a torsion torquemeter (10) calibrated according to claim **8**.

FIG.1

FIG.2

FIG.4

FIG.3

FIG.5

**EP 2 681 525 B1**

## RÉFÉRENCES CITÉES DANS LA DESCRIPTION

**Documents brevets cités dans la description**

- FR 2931552
- US 5182953 A
- EP 0517592 A